# EUROPÄISCHE PATENTANMELDUNG

(11) **EP 4 793 206 A1**
(43) Veröffentlichungstag der Anmeldung: **19.08.2026**
(21) Anmeldenummer: 26154776.4
(22) Anmeldetag: 28.01.2026
(51) Int. Cl.: B65G 1/137

(54) **ENROUTE-KOMMISSIONIERSYSTEM**

(30) Priorität: 14.02.2025 DE 102025105630
(71) Anmelder: SSI Schäfer Automation GmbH (AT), 8051 Graz (AT)
(72) Erfinder: AMON, Benjamin, 8054 Graz (AT)
(74) Vertreter: Witte, Weller & Partner Patentanwälte mbB

(57) **Zusammenfassung**

Es werden offenbart ein Verfahren (100) und ein Enroute-Kommissioniersystem (10), wobei das System aufweist: ein Lager (12) zur Lagerung einer Vielzahl von verschiedenen Artikeln (20) in Lagerbehältern (18), wobei jeder der Lagerbehälter (18) mehrere der Artikel (20) enthält; eine erste und eine zweite Kommissionierstation (16-1, 16-2), wo die Artikel (20) gemäß Kommissionieraufträgen (24) in Zielbehälter gegeben werden; ein Fördersystem (46), das das Lager (12) mit den Kommissionierstationen (16) verbindet und das mindestens einen Förderer (28) und einen AMR (14) aufweist, wobei der AMR (14) eine Pickeinheit (32) aufweist; und eine Steuerung (44), die eingerichtet ist zu veranlassen: dass der AMR (14) einen der Lagerbehälter (18) gemäß einem ersten (24-1) der Kommissionieraufträge (24) an die erste Kommissionierstation (16-1) transportiert; dass die Pickeinheit (32) einen der Artikel (20') gemäß einem zweiten (24-2) der Kommissionieraufträge (24) aus dem Lagerbehälter (18) entnimmt, während der AMR (14) den Lagerbehälter (18) zur ersten Kommissionierstation (16-1) transportiert; dass der entnommene Artikel (20') an einen der Förderer (28) übergegeben wird, der sich vom AMR (14) unterscheidet; und dass der übergegebene Artikel (20') gemäß dem zweiten Kommissionierauftrag (24-2) an die zweite Kommissionierstation (16-2) gefördert wird.

## Beschreibung

Die vorliegende Offenbarung betrifft ein Enroute-Kommissioniersystem sowie ein Enroute-Kommissionierverfahren. Der Begriff "Enroute-Kommissionierung" bezeichnet eine Kommissionierstrategie, bei der ein oder mehrere Artikel während einer primären Bewegung eines Transportmittels (z.B. eines fahrerlosen Fahrzeugs, eines autonomen Roboters, einer Drohne, etc.) zur Erfüllung eines sekundären Kommissionierauftrags entnommen werden. Typische Anwendungsbereiche sind: Distributionszentren; E-Commerce-Lager, Produktionen mit einer Just-in-Time-Belieferung; o. Ä., um nur einige Beispiele zu nennen.

Die DE 10 2008 046 325 A1 (SSI Schäfer) zeigt ein Kommissioniersystem mit einem Robotergreifer, der Artikel gemäß Kommissionieraufträgen aus Lagerbehältern von einem zuführenden (Stetig-)Förderer entnimmt und die entnommenen Artikel entweder direkt, oder indirekt über dazwischen positionierte weitere (Stetig-)Förderer, an einen Auftrags- bzw. Zielbehälter abgibt. Der Robotergreifer stellt die Kommissionierstation dar, wo die Entnahme und Abgabe stattfinden. Entlang des zuführenden Förderers können mehrere Robotergreifer hintereinander angeordnet sein, von denen jeder eine eigene Kommissionierstation darstellt. Wenn mehrere Kommissionieraufträge den gleichen Lagerbehälter benötigen, muss der Lagerbehälter zwingend zu allen Stationen bewegt werden, was insbesondere in einer mehrfachen Ein- und Auslagerung des Lagerbehälters resultiert, die den Durchsatz verringert.

Die DE 10 2016 110 820 A1 (SSI Schäfer) zeigt eine sogenannte Rendezvous-Kommissionierung. Das entsprechende System weist ein fahrerloses Transportsystem mit einer Vielzahl von fahrerlosen Transportfahrzeugen (FTF bzw. Boden-AMR) auf. Die Fahrzeuge transportieren entweder Lagerbehälter oder Auftragsbehälter. Fahrzeuge mit Lagerbehältern und Fahrzeuge mit Auftragsbehältern werden innerhalb eines Aktionsbereichs (Fahrfläche) koordiniert miteinander bewegt, so dass temporäre Kommissionierstationen gebildet werden können, wo die Artikel aus den Lagerbehältern entnommen und in die Auftragsbehälter abgegeben werden können, während die Fahrzeuge bei der Station verweilen. Zu diesem Zweck werden die entsprechenden Fahrzeuge in einen begrenzten und vordefinierten Bereich innerhalb der Fahrfläche bewegt und stehen dort so lange, bis die Artikel gemäß dem Auftrag transferiert wurden. Somit entstehen immer wiederholt vorübergehende Stationen an unterschiedlichen Orten innerhalb der Fahrfläche, d.h. dynamische Kommissionierstationen. Es kann vorkommen, dass ein Lagerbehälter zur Erfüllung mehrerer Aufträge mehrmals benötigt wird. In diesem Fall wird das entsprechende Fahrzeug sukzessive zu mehreren Stationen bewegt, wo es bis zum Ende (d.h. bis zur Artikelentnahme) des jeweiligen Auftrags verbleibt. Nachteilig ist, dass gewisse Lagerbehälter mehrfach bewegt werden, was die Wegzeiten verlängert und somit den Durchsatz (Anzahl erledigter Kommissionieraufträge pro Zeiteinheit) verringert.

Die DE 10 20 21 132 413 B3 (SSI Schäfer) zeigt ein Shuttle-Regallagersystem mit einer Vielzahl von Shuttle, die zwischen zwei benachbarten Regalen in einer Regalgasse eines Lagerblocks mittels Vertikalgreifern vertikal miteinander kooperieren, indem ein oberes Shuttle einen oder mehrere Artikel aus einem Lagerbehälter auf einem unteren Shuttle entnimmt und die entnommenen Artikel entweder an einen Sammelbehälter auf dem unteren Shuttle oder am Gassenende an einen regalexternen Förderer abgibt, der die Sammelbehälter oder die entnommenen Artikel an eine regalexterne Kommissionierstation liefert, wo die eigentliche Kommissionierung stattfindet. Auf diese Weise kann bewirkt werden, dass gewisse Lagerbehälter den Lagerblock nie verlassen. Diese Behälter verbleiben im Lagerblock. Nachteilig bei dieser Lösung ist, dass, sobald zwei Stationen angefahren werden müssen, weil zwei nicht miteinander kombinierbare Kommissionieraufträge vorliegen, der entsprechende Lagerbehälter bzw. Sammelbehälter einen langen Weg zurücklegen muss, so dass seine Durchlaufzeit entsprechend lang ist. Die gassenintegrierte Vorkommissionierung kann die Durchlaufzeit zwar ebenfalls verkürzen, verhindert aber nicht, dass der entsprechende Artikel(typ) dennoch zwei Ziele (Stationen) außerhalb des Regals anfahren muss. Außerdem funktioniert diese Art der Vorkommissionierung bzw. Auftragsvorbereitung nur innerhalb der Gasse. Außerdem müssen die zwei kooperierenden Shuttle zur gleichen Zeit am gleichen Ort sein. Eine zeitliche Divergenz zwischen Entnahme und Abgabe ist nicht zulässig. Insbesondere kann immer nur ein einziger Artikel gleichzeitig zur Übergabe an das untere Shuttle vorbereitet werden.

Des Weiteren ist ein Shuttle-Regallagersystem bekannt, siehe EP 3 564 165 A1 (Dematic), dessen gassenintegriertes Shuttle gleichzeitig einen Auftragsbehälter und einen Lagerbehälter mit sich führen kann. Ein Shuttle-integrierter Robotergreifer setzt Artikel gemäß einem Kommissionierauftrag aus dem mitgeführten Lagerbehälter in den mitgeführten Auftragsbehälter um. Die Kommissionierung erfolgt innerhalb der Regalgasse. Dies bedeutet mit anderen Worten, dass die Kommissionierstation in die Gasse verlegt ist, so dass auf eine regalexterne Fördertechnik verzichtet werden kann.

Die US 2019 / 0 337 534 A1 (Amazon) betrifft, gemäß ihrem Titel, eine bedarfsorientierte Verteilung von Artikeln mit intermodalen Transportmitteln und unbemannten Luftfahrzeugen.

Es ist daher eine Aufgabe, ein verbessertes Kommissioniersystem und Kommissionierverfahren bereitzustellen, das effizienter ist, Wegzeiten und -längen verkürzt und insbesondere den Durchsatz (erledigte Kommissionieraufträge pro Zeiteinheit) steigert.

Diese Aufgabe wird gelöst durch ein Enroute-Kommissioniersystem, das aufweist: ein Lager zur Lagerung einer Vielzahl von verschiedenen Artikeln (insbesondere einem Sortiment) in Lagerbehältern (z.B. Behälter, Kartons, Paletten, Taschen etc.), wobei jeder der Lagerbehälter mehrere der Artikel enthält; eine erste und eine zweite Kommissionierstation, wo die Artikel gemäß Kommissionieraufträgen in (insbesondere unterschiedliche) Zielbehälter gegeben werden; ein Fördersystem, das das Lager mit den Kommissionierstationen verbindet und das mindestens einen Förderer und einen AMR aufweist, wobei der AMR eine Pickeinheit aufweist; und eine Steuerung, die eingerichtet ist zu veranlassen: dass der AMR einen der Lagerbehälter gemäß einem ersten der Kommissionieraufträge an die erste Kommissionierstation transportiert; dass die Pickeinheit einen der Artikel gemäß einem zweiten der Kommissionieraufträge aus dem Lagerbehälter entnimmt, während der AMR den Lagerbehälter zur ersten Kommissionierstation transportiert; dass der entnommene Artikel an einen der Förderer übergegeben wird, der sich vom AMR unterscheidet; und dass der übergegebene Artikel gemäß dem zweiten Kommissionierauftrag an die zweite Kommissionierstation gefördert wird.

Während eines Lagerbehältertransports vom Lager zu einer Kommissionierstation sind sowohl der AMR als auch der Lagerbehälter gebunden, d.h. sie können zu keinem anderen Zweck eingesetzt werden. Wenn kurzfristig ein Artikel an einer anderen Station benötigt wird, muss diese andere Station extra angefahren werden. Das vorliegende Konzept vereinfacht den Vorgang, indem während der Fahrt direkt auf dem AMR der für die andere Station benötigte Artikel entnommen und an einem Übergabeplatz auf dem AMR bereitgestellt wird. Dieser Artikel kann nun zur anderen Station gefördert werden, indem er vom Übergabeplatz entnommen wird - beispielsweise durch Abstreifen, trägheitsbasierte Abgabe oder Aufnahme mittels einer Drohne - ohne dass der AMR zur anderen Station bewegt werden muss.

Diese Methode wird eingesetzt, um die Effizienz zu steigern, indem unnötige Stillstandzeiten minimiert werden und insbesondere parallele Entnahmen von Artikeln während des Transports erfolgen (Effizienzsteigerung). Die Kombination von AMR und Förderer kann den Bedarf an zusätzlichen Transportmitteln minimieren (Ressourcenoptimierung). Die Architektur ist skalierbar, was eine Anpassung an verschiedene Lagergrößen und Artikeltypen ermöglicht (Flexibilität). Eine Häufigkeit manueller Eingriffe wird reduziert, was Fehler minimiert und die Geschwindigkeit erhöht (Automatisierung).

Vorzugsweise ist die Steuerung ferner eingerichtet: die Kommissionieraufträge nach Artikeltypen zu analysieren; einen Transportauftrag und einen Entnahmeauftrag zu erzeugen, der an den AMR zu senden ist; und/oder einen entsprechenden Förderauftrag zu erzeugen, der an den Förderer zu senden ist.

Die Steuerung priorisiert Kommissionieraufträge basierend auf Artikeltypen und kann Transportwege optimieren (dynamische Optimierung). Die Kommissionieraufträge können intelligent verteilt werden, was den Materialfluss verbessern kann (Reduzierung von Engpässen). Eine automatisierte Steuerung kann sicherstellen, dass alle Kommissionieraufträge korrekt abgearbeitet werden (verbesserte Nachverfolgbarkeit).

Insbesondere ist der AMR ein Flug-AMR oder ein Boden-AMR.

Flug-AMR ermöglichen einen Artikelzugriff in schwer erreichbaren Lager- und Transportbereichen (erhöhte Vielseitigkeit). Boden-AMR eignen sich für stabile Transportwege, während Flug-AMR Hindernisse (vertikal) umgehen können (Anpassung an Umgebung). Die Flug-AMR zeichnen sich durch eine erhöhte Mobilität aus.

Vorzugsweise ist der AMR ein Boden-AMR und der Förderer, an denen der entnommene Artikel abgegeben wird, ist ein Flug-AMR.

Die jeweiligen Stärken von Boden- und Flug-AMR können für einen optimiertem Materialfluss benutzt werden (Kombination von Technologien). Flug-AMR können die Artikel direkt an schwer zugängliche Stationen liefern (schnellere Artikelbereitstellung).

Insbesondere entnimmt die Pickeinheit den Artikel aus dem Lagerbehälter, während der AM R den Lagerbehälter ohne Zwischenstopp zur ersten Kommissionierstation transportiert.

Für die Artikelentnahme ist kein zusätzlicher Halt erforderlich, was die Bearbeitungszeit pro Auftrag reduziert (maximale Effizienz). Die Artikel können schneller an den Stationen bereitgestellt werden (reduzierte Durchlaufzeit). Die kontinuierliche Bewegung spart Energie im Vergleich zu Stop-and-go-Prozessen (geringer Energieverbrauch).

Vorzugsweise wird der Lagerbehälter durch den AMR nur zur ersten Kommissionierstation transportiert.

Unnötige Bewegungen des AMR werden minimiert (Optimierung des Transportwegs). Der Energieverbrauch wird reduziert. Weniger Stationen resultieren in weniger Fehlern (erhöhte Prozesssicherheit). Der Verzicht auf Rücktransport oder Umwege sorgt für einen besseren Materialfluss.

Insbesondere sind die Lagerbehälter typenrein mit Artikeln befüllt.

Lagerbestände können leichter verwaltet und nachbestellt werden (bessere Planbarkeit). Ein Sortieren innerhalb des Behälters ist nicht erforderlich (effizientere Kommissionierung). Die Gefahr von falschen Kommissionierungen kann verringert werden (geringeres Fehlerrisiko).

Des Weiteren wird die Aufgabe gelöst durch ein Verfahren zum Erledigen mehrerer Kommissionieraufträge an einer ersten Kommissionierstation und an einer zweiten Kommissionierstation, die entfernt zur ersten Kommissionierstation angeordnet ist, wobei der erste Kommissionierauftrag an der ersten Kommissionierstation und der zweite Kommissionierauftrag an der zweiten Kommissionierstation zu erledigen ist durch eine Abgabe von Artikeln, die in einem gleichen Lagerbehälter enthalten sind, in Zielbehälter, wobei das Verfahren die Schritte aufweist: Bestimmen, durch die Steuerung, eines Lagerbehälters, der vom ersten Kommissionierauftrag und vom zweiten Kommissionierauftrag benötigt wird; Erzeugen, durch die Steuerung, eines Transportauftrags (insbesondere für den zuvor bestimmten Lagerbehälter), eines Entnahmeauftrags (insbesondere für den zuvor bestimmten Lagerbehälter) und eines Förderauftrags (insbesondere für den zu entnehmenden Artikel); Transportieren des Lagerbehälters durch den AMR zur ersten Kommissionierstation gemäß dem Transportauftrag; Entnehmen, (d.h. insbesondere Vereinzeln) durch eine Pickeinheit des AMR, eines Artikels aus dem Lagerbehälter gemäß dem Entnahmeauftrag, während der Lagerbehälter durch den AMR zur ersten Kommissionierstation transportiert wird; Übergeben des (entnommenen) Artikels an einen Förderer, der sich vom AMR unterscheidet, und Fördern des (übergebenen) Artikels an die zweite Kommissionierstation gemäß dem Förderauftrag; Kommissionieren eines weiteren Artikels aus dem Lagerbehälter in einen ersten der Zielbehälter bei der ersten Kommissionierstation gemäß dem ersten Kommissionierauftrag; und Kommissionieren (Abgabe) des (entnommenen, übergebenen und geförderten) Artikels in einen zweiten der Zielbehälter bei der zweiten Kommissionierstation gemäß dem zweiten Kommissionierauftrag.

Die gleichzeitige Bearbeitung mehrerer Aufträge optimiert die Prozesszeiten (Parallelisierung). Manuelle Eingriffe werden reduziert und die Prozesssicherheit wird erhöht. Das Verfahren kann für unterschiedliche Lagergrößen und Komplexitätsstufen angepasst werden (Skalierbarkeit). Außerdem werden auch die oben beschriebenen Vorteile des Systems erzielt.

Vorzugsweise weist das Verfahren ferner den Schritt auf: Bilden, durch eine Steuerung, einer Gruppe von Kommissionieraufträgen, die den ersten und zweiten Kommissionierauftrag umfasst.

Die Gruppenbildung reduziert Leerfahrten und verbessert die Ressourcennutzung (effizientere Routenplanung). Besonders dringende oder strukturell ähnliche Aufträge können gemeinsam bearbeitet werden (Priorisierung). Es wird verhindert, dass AMR und Förderer ungenutzt bleiben (bessere Systemauslastung).

Insbesondere umfasst der Schritt des Bestimmens zumindest einen der folgenden Schritte: Analysieren der Gruppe von Kommissionieraufträgen nach einem Lagerbehälter, der von mehreren der Kommissionieraufträge benötigt wird; Analysieren der Gruppe von Kommissionieraufträgen nach Kommissionieraufträgen, die für ihre Erledigung den gleichen Lagerbehälter benötigen; und/oder Analysieren der Gruppe von Kommissionieraufträgen nach einem Artikeltyp, der in mehreren Kommissionieraufträgen enthalten ist und der im gleichen Lagerbehälter gelagert wird.

Durch eine intelligente Analyse werden Transportaufträge besser verteilt (optimale Zuordnung). Ein Lagerbehälter kann für mehrere Aufträge gleichzeitig verwendet werden (Vermeidung von Doppelarbeit). Es werden weniger Bewegungen benötigt und es entsteht weniger Sortieraufwand (reduzierte Komplexität).

Diese Art der Kommissionierung bietet signifikante Effizienzsteigerungen durch Parallelprozesse, eine intelligente Steuerung und den kombinierten Einsatz von AMR und weiteren Förderern. Besonders hervorzuheben sind die Reduzierung von Stillstandzeiten, die Optimierung der Transportwege und die Minimierung von Fehlern durch eine Automatisierung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 ein schematisches Blockdiagramm eines Enroute-Kommissioniersystems;
Fig. 2 eine Vorderansicht eines AMR;
Fig. 3 ein detaillierteres Blockdiagramm eines Enroute-Kommissioniersystems;
Fig. 4 eine tabellarische Veranschaulichung einer Gruppe von Kommissionieraufträgen; und
Fig. 5 ein Flussdiagramm eines Verfahrens zum Erledigen von Kommissionieraufträgen.

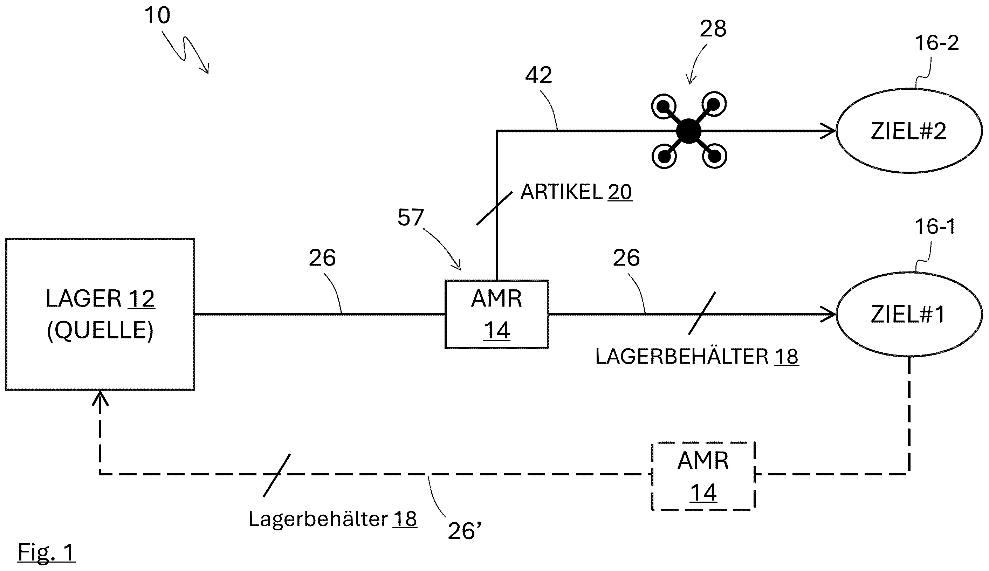

Fig. 1 zeigt ein schematisches Blockdiagramm eines Enroute-Kommissioniersystems 10, das nachfolgend kurz auch nur als "System" 10 bezeichnet werden wird. Das System 10 weist ein Lager 12, mindestens einen AMR (autonomer mobiler Roboter) 14 und mindestens zwei Kommissionierstationen 16 auf. Die Kommissionierstationen 16 werden nachfolgend kurz auch nur als "Stationen" 16 bezeichnet werden.

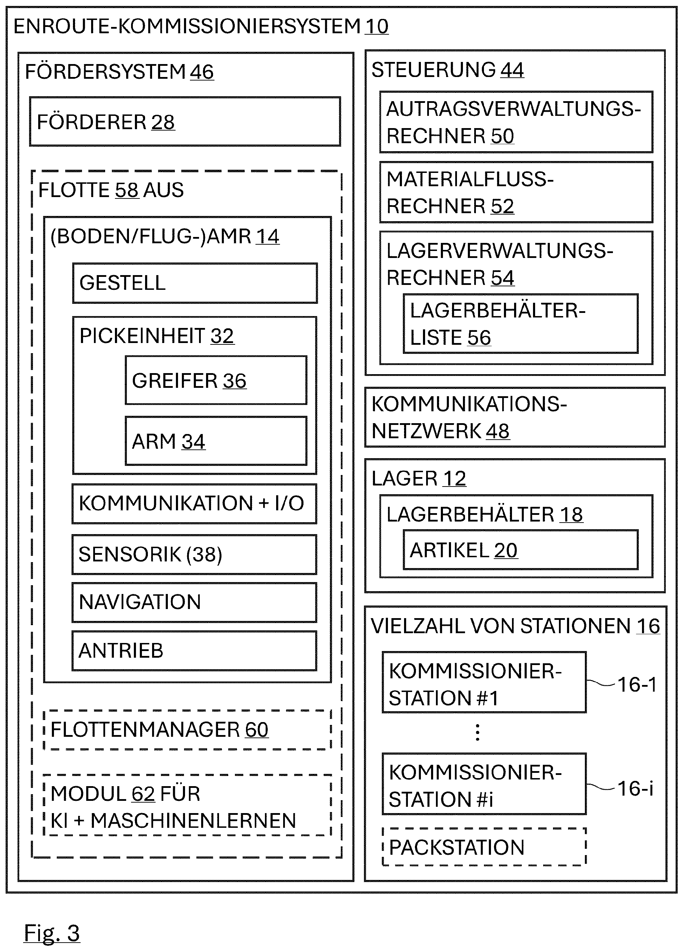

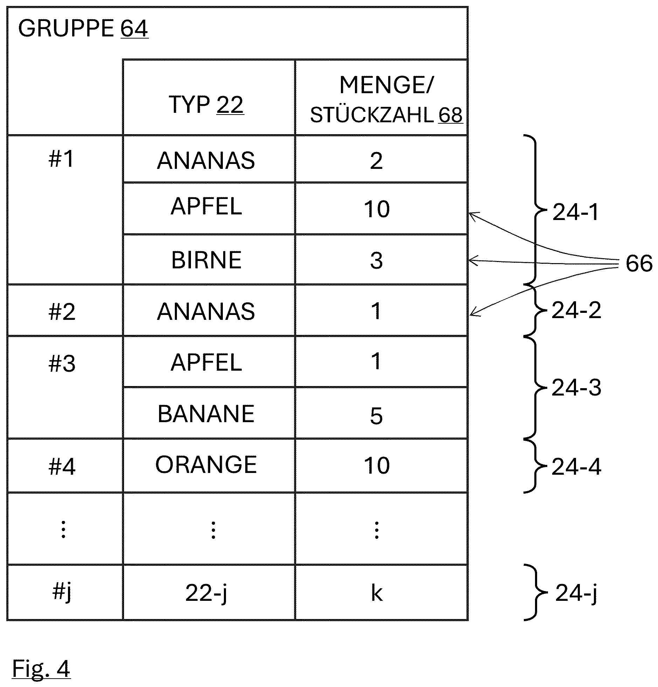

Das Lager 12 dient als Quelle für Lagerbehälter 18, die mehrere Artikel 20, insbesondere von unterschiedlichen Artikeltypen 22, enthalten. Die erste Kommissionierstation 16-1 kann ein erstes (Materialfluss-)Ziel ("Ziel #1") für einen ersten Kommissionierauftrag 24-1 (vgl. Fig. 4) darstellen. Die zweite Kommissionierstation 16-2 kann ein zweites Ziel ("Ziel #2") für einen zweiten Kommissionierauftrag 24-2 darstellen. Der AMR 14 transportiert den Lagerbehälter 18 entlang einem - vorab durch einen MFR 52 (vgl. Fig. 3) geplanten - Transportweg 26 (vgl. durchgezogene Linie in Fig. 1) zu der ersten Station 16-1. Der Lagerbehälter 18 kann entlang eines weiteren Transportwegs 26' (vgl. Strichlinie) ins Lager 12 zurück transportiert werden, nachdem die Kommissionierung (Artikelentnahme aus Lagerbehälter 18 und Abgabe an nicht dargestellten Zielbehälter) bei der Station 16-1 abgeschlossen ist, womit auch der entsprechende Kommissionierauftrag 24 erledigt ist. Es versteht sich, dass die Lagerbehälter 18 unterschiedliche Lagerbehältertypen umfassen können, wie z.B. Kunststoffbehältnisse, Kartons, Tablare, Paletten, Hängefördertaschen und Ähnliches.

Allgemein gilt, dass bei der Enroute-Kommissionierung ein oder mehrere Artikel 20 gemäß einem oder mehreren weiteren Aufträgen 24-j aus einem (einzigen) Lagerbehälter 18 entnommen - und somit vereinzelt - werden, während dieser Lagerbehälter 18 mit einem Transportmittel, wie z.B. dem AMR 14, gemäß einem ersten Auftrag 24-1 zu seinem eigentlichen Ziel transportiert wird. Die Entnahme bzw. Vereinzelung erfolgt dynamisch. Der oder die entnommenen Artikel 20 werden an einem anderen Ziel kommissioniert. Die Enroute-Kommissionierung ist besonders nützlich, wenn eine hohe Durchsatzleistung (Transport pro Zeiteinheit) erforderlich ist und die Artikel 20 schnell z.B. für einen Versand oder eine Weiterverarbeitung zusammengestellt (d.h. kommissioniert) werden müssen. Unnötige Wegezeiten werden reduziert und eine kontinuierliche Kommissionierung wird ermöglicht (Effizienzsteigerung).

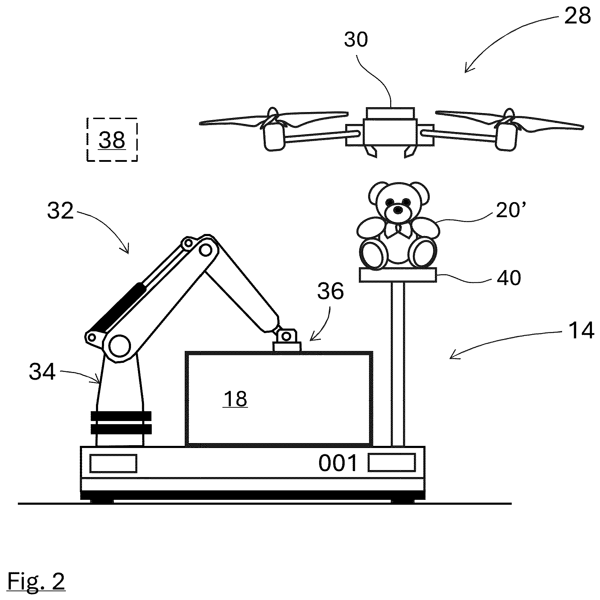

Die Enroute-Kommissionierung ist in Fig. 2 schematisch veranschaulicht, die exemplarisch einen (Boden-)AMR 14 in einer Vorderansicht zeigt. Der bodenbasierte AMR 14 kooperiert mit einem weiteren Förderer 28, der z.B. als ein (Flug-)AMR 14, d.h. als eine Drohne 30, implementiert sein kann.

Der abgebende AMR 14 ist mit einer Pickeinheit 32 versehen, die einen Arm 34 und einen Greifer 36 umfasst. Der Arm 34 ist eingerichtet, im Raum bewegt zu werden, um die Artikel 20 zu greifen und zu präsentieren. Der Greifer 36 stellt einen Endeffektor dar und ist eingerichtet, unterschiedlich geformte Artikel 20, die im Lagerbehälter 18 chaotisch verteilt angeordnet sein können, aufzunehmen, zu halten und loszulassen. Die Pickeinheit 32 kann ferner ein (3D-)Visionssystem 38 aufweisen. Insbesondere kann die Pickeinheit 32 mit einer (nicht gezeigten) 3D-Bildverarbeitungseinheit versehen sein, um auf Basis von Bildern, die das Visionssystem 38 liefert, die Artikel 20 im Lagerbehälter 18 zuverlässig und schnell zu erkennen, so dass der Greifer 36 für eine Entnahme entsprechend positioniert werden kann und dann die Entnahme durchführen kann. In der Fig. 2 ist exemplarisch ein Teddybär als entnommener Artikel 20' veranschaulicht, der auf einer (optional vorgesehenen) Plattform 40 des AMR 14 zur Übergabe an den weiteren Förderer 28 bereitgestellt werden kann. Im Beispiel der Fig. 2 könnte die Drohne 30 den entnommenen Artikel 20' z.B. mit einem (nicht gezeigten) Greifer 36 aufnehmen und zur zweiten Station 16-2 entlang eines Förderwegs 42 (vgl. Fig. 1) fördern, wo der entnommene, übergebene und geförderte Artikel 20' in einen (nicht gezeigten) Zielbehälter gegeben werden kann, um den zweiten Kommissionierauftrag 24-2 zu erledigen.

Es versteht sich, dass abhängig vom Typ des weiteren Förderers 28 die Bereitstellung unterschiedlicher Formen annehmen kann. Wenn der weitere Förderer 28 z.B. ein weiterer bodenbasierter AMR 14 (nicht gezeigt) oder ein Stetigförderer (nicht gezeigt), wie z.B. ein Rollenförderer, Bandförderer, Kettenförderer, Hängeförderer oder Ähnliches, ist, kann die Übergabe des entnommenen Artikels 20' entsprechend vorbereitet werden. Die Plattform 40 könnte zum Beispiel durch einen angetriebenen Förderer implementiert sein, um den entnommenen und vereinzelten Artikel 20' aktiv an den weiteren Förderer 28 zu übergeben. Die Übergabe könnte auch passiv erfolgen, z.B. durch Abstreifen oder Auskämmen, während der Passage des bodenbasierten AMR 14.

Allgemein gilt, dass die AMR 14 in der modernen Intralogistik und Fertigung weit verbreitet sind. Sie können in verschiedene Kategorien eingeteilt werden, abhängig von einem Einsatzbereich und einer verwendeten Technologie. Es gibt verschiedene Typen von Boden-AMR 14, wie z.B. FTF-basierte AMR oder Kl-gesteuerte autonome AMR. Fahrerlose Transportsysteme (FTS) nutzen eine Vielzahl von fahrerlosen Transportfahrzeugen (FTF), die sich (zwangsgeführten) entlang festgelegter Routen bewegen oder die Markierungen, Magnetstreifen, QR-Codes oder Ähnlichem am Boden folgen. AGV (Automated Guided Vehicles) sind derartige FTF, die entlang von optisch, magnetisch oder Kapazität erkennbaren Spuren navigieren. Kl-gesteuerte Boden-AMR 14 nutzen Sensoren, Kameras und künstliche Intelligenz (Kl), um sich flexibel und autonom in Umgebungen zu bewegen. Drohnen 30 können als spezielle Kategorie von Flug-AMR 14 betrachtet werden. Sie sind besonders nützlich in Bereichen, in denen bodengebundene AMR 14 an ihre Grenzen stoßen. Derartige AMR 14 werden auch in der vorliegenden Offenbarung eingesetzt.

Fig. 3 zeigt ein detaillierteres Blockdiagramm des Enroute-Kommissioniersystems 10, das in Fig. 1 nur schematisch veranschaulicht ist.

Zusätzlich zum Lager 12, dem AMR 14 und den Kommissionierstationen 16 umfasst das System 10 zumindest eine Steuerung 44 und ein Fördersystem 46. Ferner kann das System 10 ein Kommunikationsnetzwerk 48 umfassen, z.B. WLAN 6/6E oder 5G für eine schnelle und zuverlässige Verbindung mit den AMR 14.

Die Steuerung 44 kann einen Auftragsverwaltungsrechner (AVR) 50, einen Materialflussrechner (MFR) 52 und/oder einen Lagerverwaltungsrechner (LVR) 54 umfassen.

Der AVR 50 ist ein (Datenverarbeitungs-)System (inklusive Software), das zur Verwaltung, Steuerung und Optimierung von Kommissionieraufträgen 24 eingerichtet ist. Die Kommissionieraufträge 24 werden (manuell oder automatisiert) angenommen und automatisiert verarbeitet, indem z.B. Bestände im Lager 12 durch eine Kommunikation mit dem LVR 54 geprüft werden und indem entsprechende Transportaufträge in Kooperation mit dem MFR 52 erzeugt werden. Der MFR 52 kann (auch durch Simulation) z.B. festlegen, welcher der Kommissionieraufträge 24 an welcher der Stationen 16 erledigt wird. Der LVR 54 wählt, z.B. aus einer Lagerbehälter-Liste 56, ein oder mehrere der Lagerbehälter 18 entsprechend dem Kommissionierauftrag 24 aus. Dies bedeutet mit anderen Worten, dass der LVR 54 einen oder mehrere der Lagerbehälter 18, die die Artikel 20 enthalten, die der Kommissionierauftrag 24 benötigt, aus der Liste 56 auswählt, die die entsprechenden Lagerorte der ausgewählten Lagerbehälter 18 im Lager 12 angibt. Der MFR 52 plant und koordiniert den entsprechenden Materialfluss.

Das Fördersystem 46 umfasst den mindestens einen (weiteren) Förderer 28, insbesondere eine Vielzahl von Förderern 28, neben dem mindestens einen AMR 14. Das Fördersystem 46 ist geeignet, jede der Stationen 16 materialflusstechnisch mit dem Lager 12 zu verbinden. Jeder der AMR 14 ist geeignet, jede der Stationen 16 materialflusstechnisch mit dem Lager 12 zu verbinden. Der zumindest eine Förderer 28 ist eingerichtet, den entnommenen Artikel 20' von dem mindestens einen AMR 14 zu übernehmen. Die Übernahme erfolgt an einem Übergabepunkt 57 (vgl. Fig. 1), wo sich der AMR 14 und der weitere Förderer 28 treffen. Der Übergabepunkt 57 kann vom MFR 52 (zeitlich und örtlich) vorab geplant werden.

Mehrere der AMR 14 können gemeinsam eine Flotte 58 von AMR 14 bilden. Die Flotte 58 kann ferner ein Flottenmanager 60 und/oder ein Modul 62 für KI bzw. maschinelles Lernen umfassen. Der Flottenmanager 60 ist eingerichtet mehrere der AMR 14 zu koordinieren, Routen (Transportwege 26 und/oder Förderwege 42) zu optimieren und/oder Ladezyklen zu verwalten. Eine entsprechende Datenanalyse für die Steuerung und zur Effizienzsteigerung kann in Echtzeit erfolgen. Der Flottenmanager 60 vermeidet Kollisionen zwischen den AMR 14 und kann Prioritäten im Fall von Engpässen bzw. Staus optimieren. Das Modul 62 kann die autonome Navigation durch lernfähige Algorithmen verbessern. Die Zusammenarbeit zwischen mehreren der AMR 14 wird verbessert. Routen können dynamisch angepasst werden im Fall von Hindernissen oder Störungen.

Der oder die (weiteren) Förderer 28 können durch Stetigförderer, wie z.B. Rollenförderer, Bandförderer, Kettenförderer, etc., und/oder Unstetigförderer, wie z.B. die oben erwähnten AMR 14, implementiert werden. Der in Fig. 1 veranschaulichte Förderweg 42 kann durch ein Zusammenspiel von mehreren der Förderer 28 gebildet werden, die entsprechend miteinander kooperieren und aneinander anschließen.

Fig. 4 veranschaulicht eine Gruppe 64 von exemplarisch j Kommissionieraufträgen 24-1 bis 24-j, wobei j eine ganze Zahl ist, die allgemein größer als zwei und im Beispiel der Fig. 4 größer als vier ist. Jeder der Kommissionieraufträge 24 besteht allgemein aus einer oder mehreren Auftragszeilen 66. Jede der Zeilen 66 definiert einen der Artikeltypen 22 und eine damit verknüpfte Menge bzw. Stückzahl 68. Im Beispiel der Fig. 4 ist der erste Kommissionierauftrag 24-1 ein dreizeiliger Auftrag, der zwei Ananas, zehn Äpfel und drei Birnen definiert. Der zweite und vierte Kommissionierauftrag 24-2 und 24-4 sind jeweils einzeilige Aufträge. Der dritte Kommissionierauftrag 24-3 ist ein zweizeiliger Auftrag. Es versteht sich, dass das hier gewählte Artikelsortiment eines Lebensmittelhändlers nur ein Beispiel darstellt. Das Sortiment kann auch Artikel 22 eines Einzelwarenhändlers, einer Produktion o. Ä. umfassen.

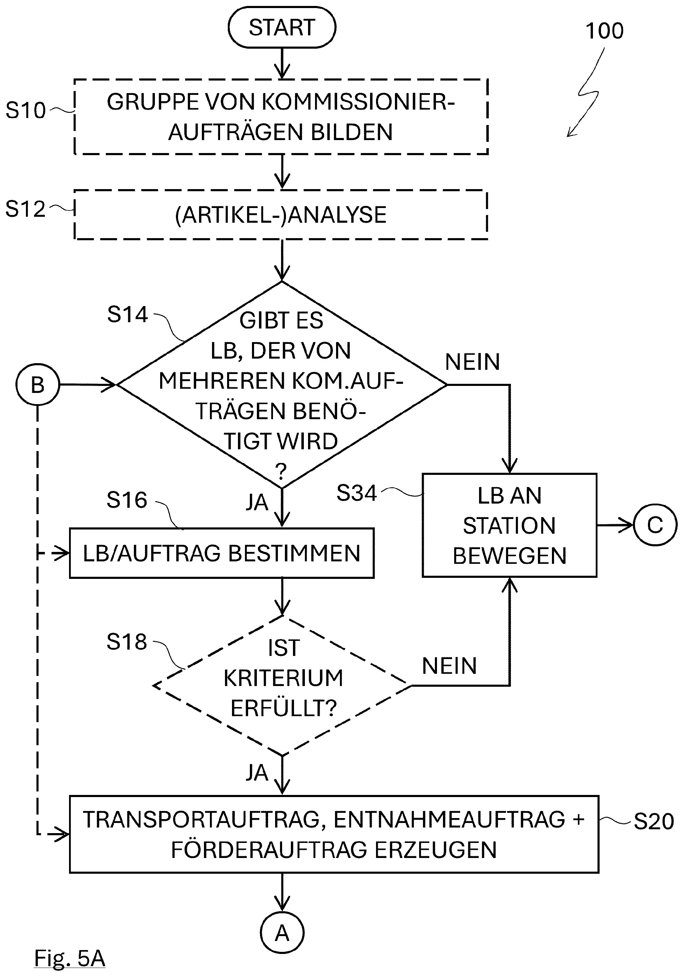

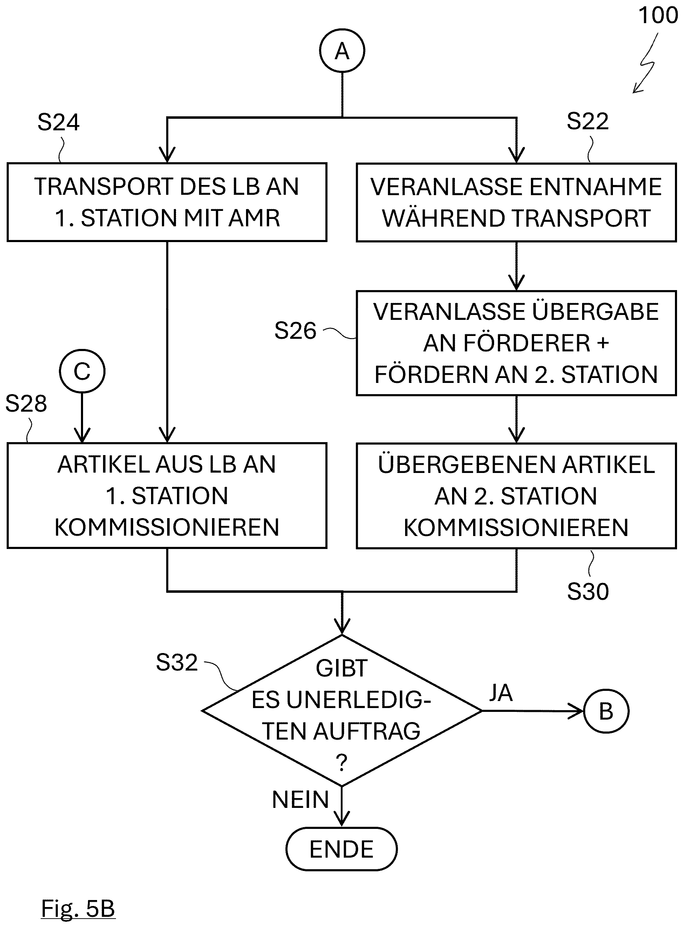

Fig. 5 veranschaulicht ein Verfahren 100 zum Erledigen bzw. Abarbeiten mehrerer Kommissionieraufträge 24 (d.h. einer Gruppe 64), die zumindest einen ersten Kommissionierauftrag 24-1 und einen zweiten Kommissionierauftrag 24-2 umfassen. Der erste Kommissionierauftrag 24-1 ist z.B. an der ersten Kommissionierstation 16-1 zu erledigen, was z.B. durch den AVR 50 festgelegt werden kann. Der zweite Kommissionierauftrag 24-2 ist z.B. an der zweiten Kommissionierstation 16-2 zu erledigen. Die zweite Kommissionierstation 16-2 ist entfernt zur ersten Kommissionierstation 16-1 angeordnet. Die Erledigung erfolgt durch eine Abgabe der entsprechenden Artikel 20, die in einem gleichen Lagerbehälter 18 enthalten sind, in mehrere Zielbehälter, die den entsprechenden Aufträgen 24 zugeordnet sind.

In einem (optionalen) Schritt S10 kann die Steuerung 44 vorab die Gruppe 64 von Kommissionieraufträgen 24 bilden, die den ersten und zweiten Kommissionierauftrag 24-1 und 24-2 umfasst. Alternativ bekommt die Steuerung 44 die Gruppe 64 von extern bereitgestellt. In einem weiteren (optionalen) Schritt S12 kann die Gruppe 64 durch die Steuerung 44 analysiert werden, z.B. nach den in den Aufträgen 24 enthaltenen Artikeltypen 22 oder nach anderen Kriterien, wie z.B. nach Lagerbehältern 18 (bzw. den darin enthaltenen Artikeln 20 bzw. Artikeltypen 22), die zur Erledigung der Aufträge 24 der Gruppe 64 benötigt werden.

In einem Schritt S14 kann die Steuerung 44 abfragen, ob es zumindest einen Lagerbehälter 18 gibt, der von mehreren Kommissionieraufträgen 24 der Gruppe 64 benötigt wird. Wenn die Lagerbehälter 18 sortenrein befüllt sind, kann die Abfrage erfolgen, indem analysiert wird, ob mehrere der Kommissionieraufträge 24 den gleichen Artikeltyp 22 beinhalten. Alternativ könnte die Steuerung 44 im Schritt S14 abfragen, ob es mehrere Kommissionieraufträge 24 in der Gruppe 64 gibt, die den gleichen Lagerbehälter 18, insbesondere an unterschiedlichen Stationen 16, benötigen. Beide Abfragen sind auch möglich, wenn die Lagerbehälter 18 durchmischt befüllt sind.

Wenn die Abfrage im Schritt S14 ergibt, dass es einen/mehrere Lagerbehälter 18 gibt, der/die jeweils von mehreren der Kommissionieraufträge 24 der Gruppe 64 benötigt wird/werden (S14: JA), bestimmt die Steuerung 44 in einem Schritt S16 zumindest diesen bzw. diese Lagerbehälter 18, siehe Schritt S16. Nachfolgend wird vereinfachend nur ein einziger Lagerbehälter 18 betrachtet, der von z.B. genau zwei der Kommissionieraufträge 24 benötigt wird, wobei der zweite Kommissionierauftrag 24-2 exemplarisch genau einen der Artikel 20 aus dem Lagerbehälter 18 benötigt.

In einem Schritt S18 kann ferner abgefragt werden, ob ein (Enroute-Kommissionierungs- )Kriterium erfüllt ist, das eine Enroute-Kommissionierung auslöst, worauf später noch genauer eingegangen werden wird.

In einem Schritt S20 erzeugt die Steuerung 44 einen (Lagerbehälter-)Transportauftrag, einen (Artikel-)Entnahme- bzw. Vereinzelungsauftrag und ein Förderauftrag für den entnommenen Artikel 20. Der Transportauftrag definiert, auf welchem Weg der Lagerbehälter 18 zu seinem Ziel (z.B. Station 16-1) transportiert wird. Der Transportauftrag kann auch definieren, welcher der AMR 14 diesen Lagerbehälter 18 zu seiner Station 16 transportiert, sofern das Fördersystem 46 mehrere der AMR 14 umfasst. Der Transportauftrag kann insbesondere vom MFR 52 erzeugt werden. Der Entnahmeauftrag definiert den Artikel 20, der aus dem zu transportierenden Lagerbehälter 18 für den zweiten Kommissionierauftrag 24-2 zu entnehmen ist. Der Entnahmeauftrag definiert insbesondere den entsprechenden Artikeltyp 22. Der Entnahmeauftrag kann zusätzliche Informationen umfassen, die es der Pickeinheit 32 des AMR 14 ermöglichen, den entsprechenden Artikel 20 zu erkennen bzw. identifizieren. Ferner kann der Entnahmeauftrag einen Entnahmezeitpunkt definieren. Der Förderauftrag definiert, auf welchem Weg der vereinzelte und entnommene Artikel 20 vom transportierenden AMR 14 zu seinem Ziel (z.B. Station 16-2) gefördert wird. Der Förderauftrag kann auch definieren, welche Komponenten des Fördersystems 46, die sich aber von dem transportierenden AMR 14 unterscheiden, an der Umsetzung des Förderwegs 42 beteiligt sind. Ferner kann der Fördererauftrag einen Zeitpunkt (insbesondere ein Übergabezeitpunkt) bzw. Zeitraum definieren, wann der entnommene Artikel 20 zu seinem Ziel zu fördern ist. Man beachte, dass in der vorliegenden Offenbarung zwischen "Transportieren" und "Fördern" lediglich unterschieden wird, um den Weg des Lagerbehälters 18 und den Weg des entnommenen Artikels 20 klarer zu unterscheiden.

Entsprechend veranlasst die Steuerung 44 in einem Schritt S22 die Entnahme des vorab festgelegten Artikels 20, während der entsprechende Lagerbehälter 18 vom AMR 14 zur Station 16-1 transportiert wird (Schritt S24). In einem Schritt S26 veranlasst die Steuerung 44 die Übergabe des entnommenen Artikels 20 an den weiteren Förderer 28 (vgl. Drohne 30 in Fig. 2), was ebenfalls passiert, während der Lagerbehälter 18 zur Station 16-1 transportiert wird. "Während des Transports" bedeutet insbesondere, dass der Transport vorzugsweise ohne Zwischenstopp erfolgt, d.h. ohne dass der AMR 14 zum Zwecke der Entnahme und/oder Übergabe anhält. Es versteht sich, dass der AMR 14 aber zum Zweck einer Kollisionsvermeidung o.Ä. - also aus verkehrsbedingten Gründen - (kurzzeitig) anhalten kann. Der Schritt S26 umfasst aber auch, dass der übernommene Artikel 20 vom weiteren Förderer 28, und gegebenenfalls noch weiteren Förderern 28, an die Station 16-2 gefördert wird.

Wenn der Lagerbehälter 18 die Station 16-1 erreicht hat, können die durch den ersten Kommissionierauftrag 24-1 vorgegebenen Artikel 20 an der Station 16-1 kommissioniert werden (Schritt S28). Die Artikel 20 werden aus dem Lagerbehälter 18 entnommen und in den ihnen zugeordneten Zielbehälter gegeben, der über nicht weiter veranschaulichte Wege z.B. in einen Versandbereich oder Warenausgangsbereich transportiert werden kann, um an seinen Auftraggeber (Herausgeber des Kommissionierauftrags 24-1) gesendet zu werden.

Wenn der entnommene, übergebene und geförderte Artikel 20 die Stationen 16-2 erreicht hat, kann der durch den zweiten Kommissionierauftrag 24-2 vorgegebenen Artikel 20 an der Station 16-2 kommissioniert werden (Schritt S30). Dieser Artikel 20 wird in den ihm zugeordneten Zielbehälter gegeben, der wiederum in den Versand- bzw. Warenausgangsbereich transportiert werden kann.

Es versteht sich, dass die Kommissionieraufträge 24-1 und/oder 24-2 auch Teilaufträge sein können, die es erfordern, dass die ihnen zugeordneten Zielbehälter an eine noch weitere Station 16 (z.B. an die nicht veranschaulichte Station 16-3) transportiert werden, um dort noch weitere Artikel 20 von anderen Teilaufträgen einzusammeln.

Nach der Kommissionierung in den Schritten S28 und/oder S30 kann in einem Schritt S32 abgefragt werden, ob es ein oder mehrere weitere Kommissionieraufträge 24 gibt, der oder die unerledigt sind. Wenn die Antwort im Schritt S32 "JA" ist, kann zur Abfrage des Schritts S14 zurückgekehrt werden und der oben beschriebene Vorgang wiederholt werden. Alternativ kann im Fall des "JA" im Schritt S32 auch direkt zu einem der Schritte S16, S18 und/oder S20 gegangen werden, insbesondere wenn im Schritt S14 gleichzeitig alle Lagerbehälter 18 bestimmt wurden, die von mehreren der Kommissionieraufträge 24 benötigt werden. Wenn es keine unerledigten Aufträge 24 gibt (S32: NEIN), kann das Verfahren 100 beendet werden.

Sollte die Abfrage im Schritt S14 ergeben, dass es keinen Lagerbehälter 18 (mehr) gibt, der von mehreren Kommissionieraufträgen 24 benötigt wird (S14: NEIN), werden die (verbleibenden) Lagerbehälter 18 an die entsprechenden Stationen 16 bewegt (Schritt S34), um anschließend an der oder den ihnen zugeordneten Stationen 16 kommissioniert zu werden (vergleichbar zu Schritt S28).

Außerdem ist zu beachten, dass die Enroute-Kommissionierung auch während eines Rücktransports des Lagerbehälters 18 (vgl. Transportweg 26' in Fig. 1) stattfinden könnte. Zum Beispiel ist es möglich, dass ein Artikel 20, der sich im zurücktransportierten Lagerbehälter 18 befindet, zur Korrektur eines Kommissionierfehlers erneut an einer der Stationen 16 benötigt wird. In diesem Fall könnte der für die Korrektur benötigte Artikel 20 entnommen, übergeben und zur entsprechenden Station 16 gefördert werden, während der Lagerbehälter 18 von einem AMR 14 einschließlich der Pickeinheit 32 ins Lager 12 zurück transportiert wird.

Nachfolgend werden die im Schritt S18 oben erwähnten Kriterien zur Durchführung einer Enroute-Kommissionierung näher betrachtet werden.

Ein erstes Kriterium könnte sein, dass der zu entnehmende Artikeltyp 22 im zweiten Kommissionierauftrag 24-2 nur in einer geringen Anzahl n (vgl. Stückzahl 68 in Fig. 4) benötigt wird, wobei n eine ganze Zahl größer null ist. Die Anzahl n beträgt vorzugsweise eins, zwei, drei, vier oder fünf. Die Kommissionieraufträge #1 und #2 in Fig. 4 sind ein gutes Beispiel für dieses Kriterium, weil der zweite Auftrag #2 nur eine Ananas benötigt. Ähnliches gilt für die Aufträge #1 und #3 der Fig. 4. Die Aufträge #2 bis #4 sind untereinander nicht für eine Enroute-Kommissionierung geeignet.

Ein zweites Kriterium könnte sein, dass der zweite Kommissionierauftrag 24-2 ein sogenannter Eilauftrag ist, der in einer Auftragsabarbeitungsreihenfolge eine hohe Priorität hat.

Ein weiteres Kriterium könnte sein, dass der mehrfach benötigte Artikel 20 bzw. Artikeltyp 22 nur in wenigen weiteren Kommissionieraufträgen 24, insbesondere nur in einem einzigen weiteren kommissionierten Auftrag 24, erscheint.

Ein noch weiteres Kriterium könnte sein, dass der Lagerbehälter 18, der aktuell ins Lager 12 zurück transportiert wird, für eine Fehlerkorrektur benötigt wird, wie oben erläutert.

Ferner ist es möglich, die Effizienzsteigerung zu betrachten. Es können Werte berechnet werden für eine gewöhnliche Kommissionierung, bei der der Lagerbehälter 18 hintereinander an zwei Stationen 16 transportiert wird, und für die Enroute-Kommissionierung, wo der Lagerbehälter 18 nur zu einer der Stationen 16 transportiert wird, während einer oder mehrere der Artikel 20 unterwegs vereinzelt und isoliert zur anderen Station 16 gefördert werden. Die damit verknüpften Wege 26 und/oder 42 und/oder Aktionen (Vereinzelung, etc.) können mit entsprechenden Bewertungsparametern versehen sein, die in die Berechnung mit einfließen können. Diese finalen Bewertungswerte können miteinander verglichen werden.

Es versteht sich, dass es noch weitere Kriterien gibt, die entscheidend dafür sind, ob eine Enroute-Kommissionierung sinnvoll ist oder nicht. Eines oder mehrere der Kriterien könnten bei der Entscheidung berücksichtigt werden.

### BEZUGSZEICHENLISTE

- 10: (Enroute-Kommissionier-)System
- 12: Lager
- 14: AMR
- 16: (Kommissionier-)Station
- 18: Lagerbehälter
- 20: Artikel
- 22: (Artikel-)Typ
- 24: Kommissionierauftrag
- 26, 26': Transportweg
- 28: Förderer, weiterer
- 30: Drohne
- 32: Pickeinheit
- 34: Arm
- 36: Greifer
- 38: (3D-) Visionsystem
- 40: Plattform
- 42: Förderweg
- 44: Steuerung
- 46: Fördersystem
- 48: Kommunikationsnetzwerk
- 50: Auftragsverwaltungsrechtler
- 52: Materialflussrechner (MFR)
- 54: Lagerverwaltungsrechner (LVR)
- 56: Lagerbehälter-Liste
- 57: Übergabepunkt
- 58: Flotte aus AMR
- 60: Flottenmanager
- 62: Modul für KI und/oder maschinelles Lernen
- 64: Gruppe aus 24
- 66: Zeile von 24
- 68: Menge/Stückzahl
- 100: (Kommissionier-)Verfahren

## Patentansprüche

1. Enroute-Kommissioniersystem (10), das aufweist:
ein Lager (12) zur Lagerung einer Vielzahl von verschiedenen Artikeln (20) in Lagerbehältern (18), wobei jeder der Lagerbehälter (18) mehrere der Artikel (20) enthält;
eine erste und eine zweite Kommissionierstation (16-1, 16-2), wo die Artikel (20) gemäß Kommissionieraufträgen (24) in Zielbehälter gegeben werden;
ein Fördersystem (46), das das Lager (12) mit den Kommissionierstationen (16) verbindet und das mindestens einen Förderer (28) und einen AMR (14) aufweist, wobei der AMR (14) eine Pickeinheit (32) aufweist; und
eine Steuerung (44), die eingerichtet ist zu veranlassen:
dass der AMR (14) einen der Lagerbehälter (18) gemäß einem ersten (24-1) der Kommissionieraufträge (24) an die erste Kommissionierstation (16-1) transportiert;
dass die Pickeinheit (32) einen der Artikel (20') gemäß einem zweiten (24-2) der Kommissionieraufträge (24) aus dem Lagerbehälter (18) entnimmt, während der AMR (14) den Lagerbehälter (18) zur ersten Kommissionierstation (16-1) transportiert;
dass der entnommene Artikel (20') an einen der Förderer (28) übergegeben wird, der sich vom AMR (14) unterscheidet; und
dass der übergegebene Artikel (20') gemäß dem zweiten Kommissionierauftrag (24-2) an die zweite Kommissionierstation (16-2) gefördert wird.

2. Enroute-Kommissioniersystem (10) nach Anspruch 1, wobei die Steuerung (44) ferner eingerichtet ist: die Kommissionieraufträge (24) nach Artikeltypen (22) zu analysieren; einen Transportauftrag und einen Entnahmeauftrag zu erzeugen, der an den AMR (14) zu senden ist; und/oder einen entsprechenden Förderauftrag zu erzeugen, der an den Förderer (28) zu senden ist.

3. Enroute-Kommissioniersystem (10) nach Anspruch 1 oder 2, wobei der AMR (14) ein Flug-AMR (14) oder ein Boden-AMR (14) ist.

4. Enroute-Kommissioniersystem (10) nach Anspruch 1 oder 2, wobei der AMR (14) ein Boden-AMR (14) ist und wobei der Förderer (28), an denen der entnommene Artikel (20') abgegeben wird, ein Flug-AMR (14) ist.

5. Enroute-Kommissioniersystem (10) nach einem der Ansprüche 1 bis 4, wobei die Pickeinheit (32) den Artikel (20') aus dem Lagerbehälter (18) entnimmt, während der AMR (14) den Lagerbehälter (18) ohne Zwischenstopp zur ersten Kommissionierstation (16-1) transportiert.

6. Enroute-Kommissioniersystem (10) nach einem der Ansprüche 1 bis 5, wobei der Lagerbehälter (18) durch den AMR (14) nur zur ersten Kommissionierstation (16-1) transportiert wird.

7. Enroute-Kommissioniersystem (10) nach einem der Ansprüche 1 bis 6, wobei die Lagerbehälter (18) typenrein mit Artikeln (20) befüllt sind.

8. Verfahren (100) zum Erledigen mehrerer Kommissionieraufträge (24) an einer ersten Kommissionierstation (16-1) und an einer zweiten Kommissionierstation (16-2), die entfernt zur ersten Kommissionierstation (16-1) angeordnet ist, wobei der erste Kommissionierauftrag (24-1) an der ersten Kommissionierstation (16-1) und der zweite Kommissionierauftrag (24-2) an der zweiten Kommissionierstation (16-2) zu erledigen ist durch eine Abgabe von Artikeln (20), die in einem gleichen Lagerbehälter (18) enthalten sind, in Zielbehälter, wobei das Verfahren (100) die Schritte aufweist:
Bestimmen (S16), durch eine Steuerung (44), eines Lagerbehälters (18), der vom ersten Kommissionierauftrag (24-1) und vom zweiten Kommissionierauftrag (24-2) benötigt wird;
Erzeugen (S20), durch die Steuerung (44), eines Transportauftrags, eines Entnahmeauftrags und eines Förderauftrags;
Transportieren (S24) des Lagerbehälters (18) durch den AM R (14) zur ersten Kommissionierstation (16-1) gemäß dem Transportauftrag;
Entnehmen (S22), durch eine Pickeinheit (32) des AMR (14), eines Artikels (20') aus dem Lagerbehälter (18) gemäß dem Entnahmeauftrag, während der Lagerbehälter (18) durch den AMR (14) zur ersten Kommissionierstation (16-1) transportiert wird;
Übergeben (S26) des Artikels (20') an einen Förderer (28), der sich vom AMR (14) unterscheidet, und Fördern des Artikels (20') an die zweite Kommissionierstation (16-2) gemäß dem Förderauftrag;
Kommissionieren (S28) eines weiteren Artikels (20) aus dem Lagerbehälter (18) in einen ersten der Zielbehälter bei der ersten Kommissionierstation (16-1) gemäß dem ersten Kommissionierauftrag (24-1); und
Kommissionieren (S30) des Artikels (20') in einen zweiten der Zielbehälter bei der zweiten Kommissionierstation (16-2) gemäß dem zweiten Kommissionierauftrag (24-2).

9. Verfahren (100) nach Anspruch 8, das ferner aufweist:
Bilden (S10), durch die Steuerung (44), einer Gruppe (64) von Kommissionieraufträgen (24), die den ersten und zweiten Kommissionierauftrag (24-1, 24-2) umfasst.

10. Verfahren (100) nach Anspruch 8 oder 9, wobei der Schritt des Bestimmens (S16) zumindest einen der folgenden Schritte umfasst:
Analysieren der Gruppe (64) von Kommissionieraufträgen (24) nach einem Lagerbehälter (18), der von mehreren der Kommissionieraufträge (24) benötigt wird;
Analysieren der Gruppe (64) von Kommissionieraufträgen (44) nach Kommissionieraufträgen (44), die für ihre Erledigung den gleichen Lagerbehälter (18) benötigen; und/oder
Analysieren der Gruppe (64) von Kommissionieraufträgen (24) nach einem Artikeltyp (42), der in mehreren Kommissionieraufträgen (44) enthalten ist und der im gleichen Lagerbehälter (18) gelagert ist.
